# EUROPÄISCHE PATENTANMELDUNG

(11) **EP 1 431 256 A2**
(43) Veröffentlichungstag der Anmeldung: **23.06.2004**
(21) Anmeldenummer: 03025950.1
(22) Anmeldetag: 13.11.2003
(51) Int. Cl.: C04B 11/06, C01F 11/46

(54) **Verfahren zur Hydratisierung von Anhydriten**

(30) Priorität: 18.12.2002 DE 10259165; 09.07.2003 DE 10330325
(71) Anmelder: Forschungszentrum Karlsruhe GmbH, 76133 Karlsruhe (DE)
(72) Erfinder: Dehne, Gerald, Dr., 37441 Bad Sachsa (DE); Nüesch, Rolf, Prof. Dr., 76137 Karlsruhe (DE); Schwotzer, Matthias, 76131 Karlsruhe (DE)
(74) Vertreter: Fitzner, Uwe

(57) **Zusammenfassung**

Die vorliegende Erfindung betrifft ein Verfahren zur Hydratisierung von Anhydriten wobei Anhydrit-Granulate mit wässrigen Lösungen von Salzen ein- oder zweiwertiger Metalle oder Gemische hiervon beaufschlagt werden.

## Beschreibung

Die vorliegende Erfindung betrifft ein Verfahren zur Hydratisierung von Anhydriten, insbesondere zur Herstellung von Gips aus Anhydrit.

Gips ist ein wesentlicher Rohstoff für die Herstellung von zahlreichen Produkten. Beispielsweise dient der Gips der Herstellung von Gipsbindemitteln, die in verschiedenen Industriebereichen Verwendung finden. Beispiele sind das Bauwesen, die keramische Industrie sowie die Medizintechnik. Zur Produktion hochwertiger Spezialgipse für die keramische Industrie und die Dentaltechnik sind an die Rohstoffe hohe Qualitätsanforderungen zu stellen. Solche Stoffe sind als natürliche Ressourcen immer schwerer zugänglich.

In den meisten Gipslagerstätten sind nämlich Anhydrit- und Gipsgesteine miteinander vergesellschaftet. D.h. geologisch bildeten sich Gipsschichten (in der Regel 2 bis 15 m) als Gipshaut auf den bis zu 80 m mächtigen Anhydritkomplexen. Durch den Abbau der Gipsschichten wird der darunter liegende Anhydrit freigelegt.

Die unter natürlichen Bedingungen spontan ablaufende Umwandlungsreaktion von Anhydrit in Gips ist für eine wirtschaftlich relevante Neubildung von Gipslagerstätten zu langsam. Denn diese Reaktion dauert 10² bis 10⁶ Jahre.

Aufgabe der vorliegenden Erfindung ist es demgemäß, ein Verfahren zur Verfügung zu stellen, mit welchem sich Anhydrite hydratisieren lassen. Insbesondere ist es das Ziel der Erfindung, den Gipsanteil in Anhydritgesteinen bzw. Anhydrit-Gips-Mischgesteinen durch eine technische Beschleunigung der Umwandlung von Anhydrit (wasserfreies Kalziumsulfat=CaSO₄) in Gips (CaSO₄x2H₂O), d.h. in das Dihydrat des Kalziumsulfates, bis zur industriellen Nutzbarkeit zu erhöhen.

Diese Aufgabe wird dadurch gelöst, dass Anhydrit-Granulate mit wässrigen Lösungen von Salzen ein- oder zweiwertiger Metalle oder von Gemischen hiervon beaufschlagt werden.

Erfindungsgemäß ist es wesentlich, dass das Anhydritmaterial in granulierter Form vorliegt. Je geringer die Korngröße ist, desto besser läuft die Reaktion ab. Erfindungsgemäß ist es daher bevorzugt, Granulate mit einer Größe von, ≤ 15 cm besonders bevorzugt, ≤ 10 cm herzustellen. Besonders bevorzugt sind Ganulate mit einer Kantenlänge von 5 -bis 10 cm.

Als Granulate werden vorzugsweise wasserfreie Kalziumsulfate (CaSO4₄) eingesetzt. Solche wasserfreien Kalziumsulfate kommen als sogenannte Anhydritgesteine in Form von kompaktem, dichtem Material in Gipslagerstätten vor. Diese können ― wie oben dargestellt ― entweder unter einer Gipshaut oder in Form von Mischgesteinen als Anhydrit-Gips vorhanden sein.

Erfindungsgemäß besonders bevorzugt ist es demgemäß, das in solchen Lagerstätten vorliegende Anhydrit in situ in Gips umzuwandeln. Zur Durchführung des Verfahrens müssen die Anhydritgesteine zerkleinert werden. Dies kann mit beliebigen mechanischen Verfahren durchgeführt werden. Besonders bevorzugt ist die sprengtechnische Zerkleinerung. Grundsätzlich können beliebige Sprengverfahren angewandt werden.

Bezüglich des Sprengverfahrnes kann sowohl das Vorspaltverfahren- als auch das Abspaltverfahren zum Einsatz komen. Im Vorspaltverfharen wird chronologisch gesehen vor der Hauptsprengung ein sprengtechnischer Außenkranz angelegt, der den gesamten zu hydratisierenden Anhydritkomplex vom übrigen Gesteinsverband löst und die Freisetzugn der Sprengenergie auf den inneren Bereich konzentriert. Durch die nachfolgenden Sprengungen wird eine Zerkleinerung des innenliegenden, d.h. im Innern des Sprengkranzes liegenden Anhydritmaterials erreicht. Hierdurch wird eine Wanne erzeugt, in der die Granulate gesammelt sind. Beim Abspaltverfahren wird die Kösung vom übrigen Geseteinsverband und die Zerkleinerung des Anhydrits ausgehend von einem zentralen Brennereinbruch nahezu zeitgleich durchgeführt.

Erfindungsgemäß bevorzugt ist es, folgende Sprengparameter einzuhalten:
Es wird ein äußerer Ring von Profilbohrlöchern mit einer Tiefe von 1-5 m, vorzugsweise 1-3 m angelegt. Der Bohrlochdurchmesser liegt vorzugsweise zwischen 30 und 50 mm, besonders bevorzugt zwischen 35 und 45 mm. Der Bohrlochabstand liegt vorzugsweise zwischen 20 und 50 cm, besonders bevorzugt zwischen 30 und 40 cm.

Die sich im zentralen Bereich des Sprengfeldes befindlichen Erweiterungsbohrlöcher weisen einen Abstand und eine Vorgabe von 0,3 x 0,3 m bis 0,6 x 0,6 m, vorzugsweise 0,4 x 0,4 m bis 0,5 x 0,5 m auf. Der Abstand dieser Bohrlöcher zu den Profilbohrlöchern des Außenkranzes beträgt vorzugsweise 0,1-0,5 m, besonders bevorzugt 0,2-0,4 m.

Die Anzahl der Erweiterungsbohrlöcher, Zündmittel, Lademenge und Ladeart werden je nach Bedarf gestaltet. Die Schaltung der Zündung kann in Reihenschaltung oder Parallelschaltung erfolgen. Bevorzugt ist die Parallelschaltung.

Die oben beschriebenen Anhydritgranulate werden erfmdungsgemäß mit wässrigen Lösungen von Reaktionsbeschleunigern beaufschlagt. Vorzugsweise handelt es sich dabei um Lösungen der Salze ein- oder zweiwertiger Metalle oder Gemische hiervon. Besonders bevorzugt werden erfindungsgemäß Alkali- oder Erdalkalimetalle. Ganz besonders sind Alkalimetallsalzlösungen. Höchst bevorzugt ist Kalium.

Die Alkalimetallsalzlösungen enthalten vorzugsweise als Anionen Sulfate, Karbonate, Nitrate und Chloride. Besonders bevorzugt sind Sulfate. Demgemäß sind insbesondere Alkalisulfate bevorzugt. Zu den höchst bevorzugten Sulfaten gehören Kaliumsulfate.

Die erfindungsgemäß eingesetzten wässrigen Lösungen enthalten die beschriebenen Salze in Konzentrationen von 0,02 bis 0,9 Mol pro Liter Lösungsmittel, besonders bevorzugt 0,03 bis 0,6 Mol pro Liter Lösungsmittel, ganz besonders bevorzugt 0,05 bis 0,3 Mol pro Liter Lösungsmittel.

Erfindungsgemäß kann es ferner vorteilhaft sein, wenn während der Reaktion Ton, tonhaltiges Material, Keramik, Metalle, Metalloxide oder Gemische dieser Stoffe anwesend sind. Insbesondere die Anwesenheit von Ton gewährleistet, dass die Wasserversorgung der Reaktion konstant gehalten wird.

In einer Variante der Erfindung wird das Anhydritmaterial auf eine schiefe Ebene relativ flach lagernd aufgebracht. Durch zyklische Beregnung mit der oben beschriebenen Reaktionslösung, vorzugsweise K₂SO₄-Lösung wird das Material wechselfeuchten Bedingungen ausgesetzt. Die Feucht-Trocken-Zyklen fördern die Vergipsung durch Lösungs- und Kristallisationsreaktionen leicht löslicher Salze, welche das Gefüge des Anhydritgesteins auflockern.

Des weiteren ist das Anhydritmaterial in der lockeren Schüttung auf der schiefen Ebene den Schwankungen der klimatischen Bedingungen gut zugänglich. Vergipsungsfördernde Faktoren wie Frost-Tau-Wechsel und thermisch induzierte Spannungen im Gestein, z.B. durch Sonneneinstrahlung, können bei dieser offenen Lagerung des Anhydrits ihren Einfluss auf das Gesteinsgefiige sehr effektiv entfalten. Anhydrit, welche an der Reaktionslösung lagert, ist diesen Einflüssen weniger leicht zugänglich.

Auf der schiefen Ebene läuft die Reaktionslösung in ein Vorratsbehältnis zurück und steht der erneuten Befeuchtung des Materials zur Verfügung.

Versuche mit dem erfindungsgemäßen Verfahren haben ergeben, dass sich eine schnelle und effiziente Umwandlung von Anhydritgestein in Hydrate erreichen lässt. Insbesondere lässt sich eine effiziente Herstellung von Gips durchführen. Die Umwandlung von Anhydrit in Gips läuft hierbei unter Volumenzunahme (bis zu 60 %) der Festphase ab. Anhydrit, welcher sich in Gips umwandelt, quillt durch -den Kristallisationsdruck wachsender Gipskristalle auf. Es konnte in Versuchen festgestellt werden, dass in ca. 2 Wochen bei Zusatz einer 0,15 molaren Kaliumsulfatlösung bereits signifikante Anteile des Anhydrits in Gips umgewandelt worden sind. Durch die Volumenzunahme und den Kristallisationsdruck entstehen feinste Frakturen, durch die die erfindungsgemäße Beschleunigungslösung in das Innere des Anhydritgesteins eindringt und dort weitere Vergipsungsprozesse induziert.

Mit dem erfindungsgemäßen Verfahren ist es somit möglich, bisher im technischen, ökonomischen Rahmen nicht zur Gipsgewinnung nutzbare Anhydritlager in Gips umzuwandeln und so weitere Ressourcen bereitzustellen.

Die Erfindung wird im folgenden anhand von Beispielen näher erläutert:
Anhydritmaterial eines Steinbruchs wurde sprengtechnisch vorzerkleinert. Es wurde ein spezielles Sprengverfahren angewandt, um die gewünschte Stückigkeit des Anhydritgranulats einzustellen. Auf einem ca. 150 qm² großen Versuchsfeld wurde ein 1,5 bis 2 m tiefe Grube gesprengt. Hierbei wurden die Sprengparameter der 5. Sprengung vom 27.06.2002 gemäß den folgenden Tabellen 1 und 2 eingestellt.

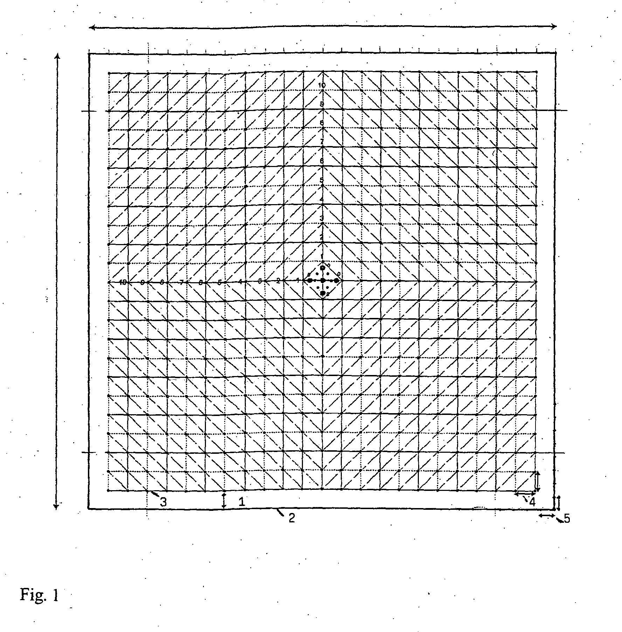

In der Figur 1 ist die für die Durchführung der Versuche gewählte Anordnung dargestellt. Hierbei bedeuten:
1- Abstand Innenkranz-Außenkranz (=0,7 m)
2- Außenkranz
3- Innenkranz
4- Lochabstand Innenkranz (=0,5 m)
5- Lochabstand Außenkranz (=0,35 m)
- _ _ _ _ _ _ Linien gleicher Zündzeitstufe
- ........... Zündzeitstufe in Millisekunden
o = Loch
im Zentrum: Einbruch (Zündzeitstufe o ms)

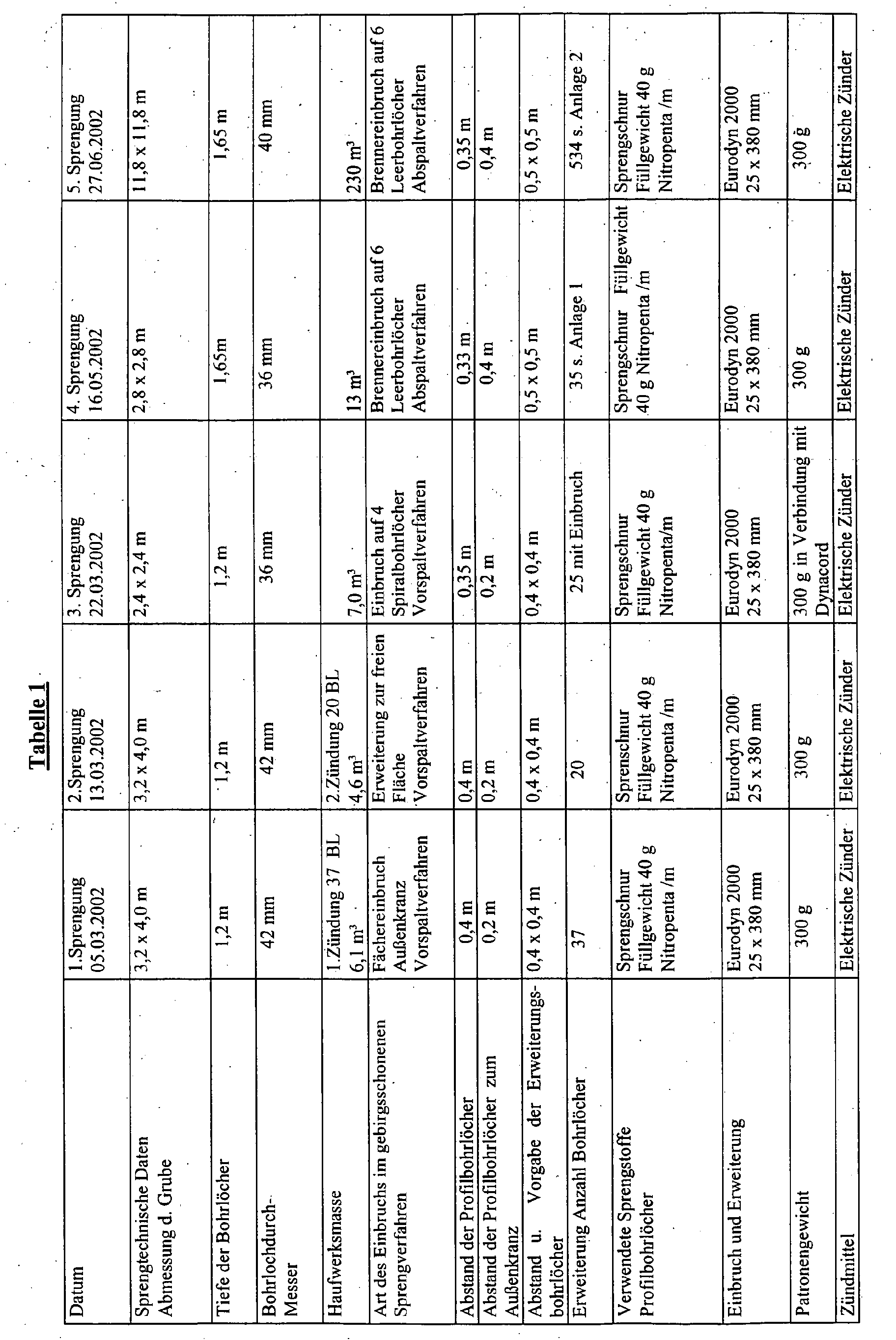

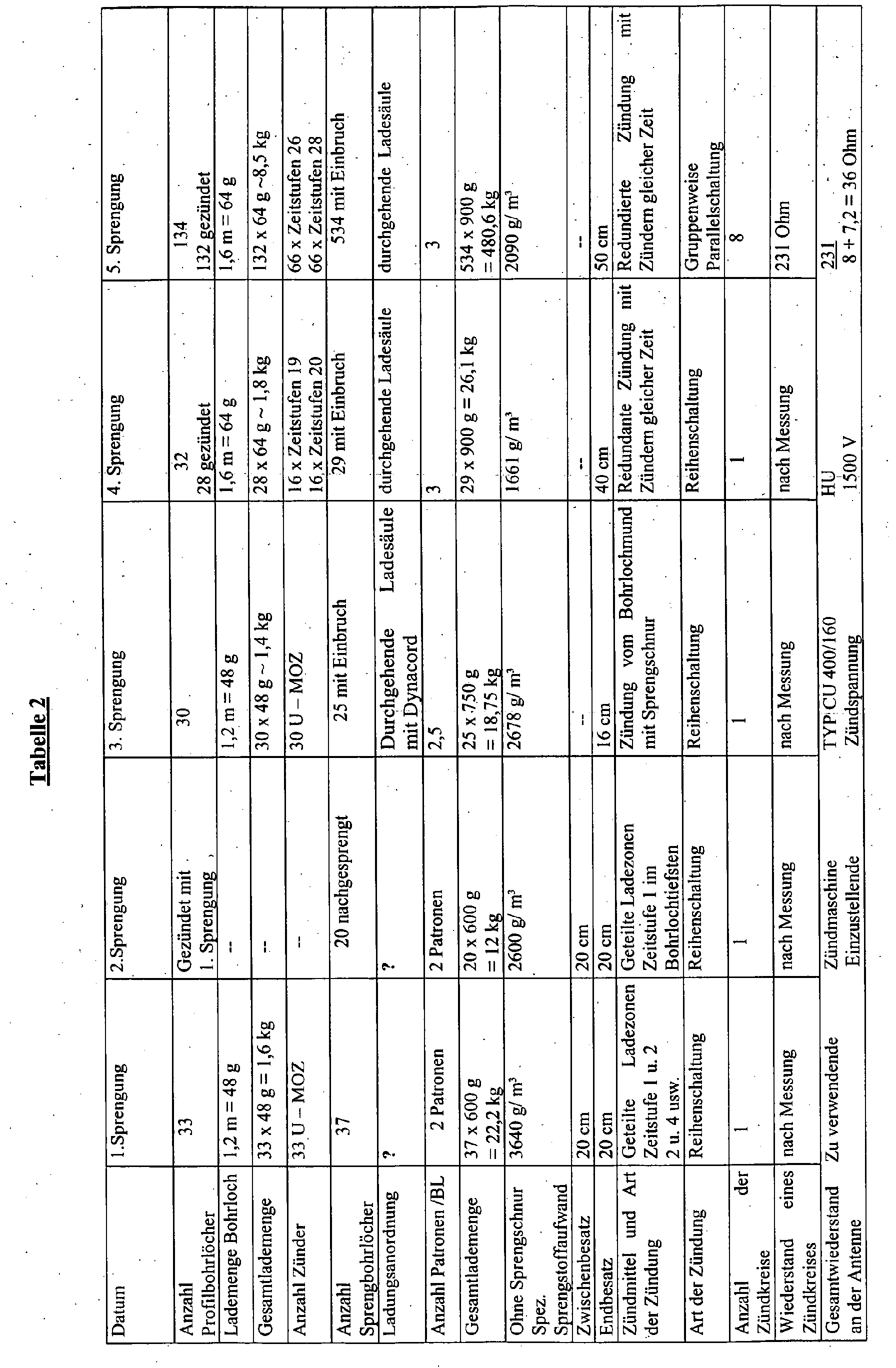

Neben der Auflockerung und Einstellung der Stückigkeit des Anhydritmaterials wurde durch die Sprengung eine nahezu dichte Wanne definierter Größe erstellt.

Durch eine vorgeschaltete Kranzsprengung wurde hierbei ein rechteckiges System aus Rissen erzeugt, so dass die Sprengenergie der folgenden Hauptladungen ausschließlich zur Zerkleinerung des innerhalb des Sprengkranzes liegenden Anhydritmaterials beitrug. Der Besatz der Sprenglöcher wurde so gewählt, dass der Untergrund nicht durch die Sprengung beschädigt und zerklüftet wurde. Auf diese Art wurde sichergestellt, dass eine möglichst dichte Wanne entsteht, in welcher das zerkleinerte Granulat sich befindet. Die entstandenen Granulate wiesen schwerpunktmäßig eine Größe von 5 bis 10 cm auf.

Nach der Sprengung wurde das Versuchsfeld freigeräumt. Es entstand ein rechteckiges Loch mit einem gut definierten Volumen von 12 x 12 m, bei 1,5 bis 2 m Tiefe. Das Versuchsfeld wurde mit einem Abdichtungssystem aus Vlies und einer ca. 2 mm starken Folie versehen, um zu verhindern, dass die Reaktionslösung durch eventuell vorhandene Klüfte im Untergrund versickert. Danach wurde auf die Folie Anhydritgranulat aufgebracht.

In entsprechend dimensionierten Behältern wurden Salzlösungen mit 0,15 molaren Kaliumsulfatlösungen angesetzt. Mit diesen Lösungen wurde in regelmäßigen Zeitabständen das Anhydritmaterial beregnet.

Bei der o.g. bevorzugten Stückigkeit von 5 bis 10 cm ist in starker Abhängigkeit von den Witterungsbedingungen (Dauer von Regen-, Schnee- und Trockenperioden, Intensität des Frost/Tau-Wechsels bzw. der Salzsprengung etc.) mit einer befriedigenden, d.h. wirtschaftlich verwendbaren Vergipsungsrate, in 1 ½ bis 4 Jahren zu rechnen.

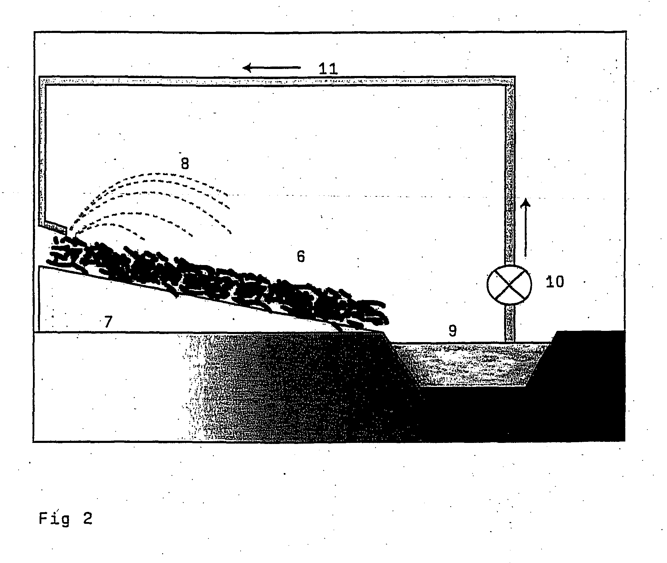

In der Figur 2 ist die weiterhin bevorzugte erfindungsgemäße Verfahrensvariante der Hydratisierung von Anhydrit auf einer schiefen Ebene schematisiert. Das zu vergipsene Anhydritmaterial (6) wird auf die schiefe Ebene (7) flach lagernd aufgebracht. Durch die zyklische Beregnung (8) mit einer Reaktionslösung wird das Material wechselfeuchten Bedingungen ausgesetzt. Die feuchten und trockenen Zyklen fördern die Vergipsung durch Lösungs- und Kristallisationsreaktionen leicht löslicher Salze, welche das Gefüge des Anhydritgesteins auflockern.

Wie bereits im allgemeinen Teil beschrieben wurde, ist außerdem das Anhydritmaterial (6) in der lockeren Schüttung in der schiefen Ebene (7) den Schwankungen der klimatischen Bedingungen gut zugänglich. Vergipsungsfördernde Faktoren wie Frost und Tau sowie thermisch induzierte Spannungen im Gestein, z.B. durch Sonneneinstrahlung, können ihren Einfluss auf das Gesteinsgefüge bei der erfindungsgemäßen Anordnung gemäß Figur 2 sehr effektiv entfalten. Anhydrit, welcher in der Reaktionslösung lagert, ist diesen Einflüssen weniger leicht zugänglich.

Auf der schiefen Ebene (7) läuft die Reaktionslösung in das Vorratsbehältnis (9) zurück und steht der erneuten Befeuchtung des Materials zur Verfügung. Hierfür wird über die Pumpe (10) und die Leitung (11) die Reaktionslösung zurückgepumpt und der zyklischen Beregnungseinrichtung (8) wieder zugeführt.

## Patentansprüche

1. Verfahren zur Hydratisierung von Anhydriten,
**dadurch gekennzeichnet, dass** Anhydrit-Granulate mit wässrigen Lösungen von Salzen ein- oder zweiwertiger Metalle oder Gemischen hiervon beaufschlagt werden.

2. Verfahren nach Anspruch 1,
**dadurch gekennzeichnet, dass** Granulate mit einer durchschnittlichen Größe von 5 - 10 cm eingesetzt werden.

3. Verfahren nach Anspruch 1 oder 2,
**dadurch gekennzeichnet, dass** Granulate mit einer Kantenlänge von 5 - 10 cm eingesetzt werden.

4. Verfahren nach Anspruch 1,
**dadurch gekennzeichnet, dass** wasserfreie Kalziumsulfate in granulierter Form eingesetzt werden.

5. Verfahren nach einem der Ansprüche 1 bis 4,
**dadurch gekennzeichnet, dass** die Anhydritgranulate auf einer schiefen Ebene ungeordnet und mit wässrigen Lösungen von Salzen einoder mehrwertiger Metalle oder Gemischen hiervon beaufschlagt werden.

6. Verfahren nach einem der Ansprüche 1 bis 5,
**dadurch gekennzeichnet, dass** wässrige Lösungen mit einer Salzkonzentration von 0,02 bis 0,9 Mol/Liter eingesetzt werden.

7. Verfahren nach einem der Ansprüche 1 bis 6,
**dadurch gekennzeichnet, dass** wässrige Lösungen mit einer Salzkonzentration von 0,05 bis 0,3 Mol/Liter eingesetzt werden.

8. Verfahren nach einem der Ansprüche 1 bis 7,
**dadurch gekennzeichnet, dass** Alkalimetall oder Erdalkalimetallsalzlösungen eingesetzt werden.

9. Verfahren nach einem der Ansprüche 1 bis 8,
**dadurch gekennzeichnet, dass** kaliumsalzhaltige Lösungen eingesetzt werden.

10. Verfahren nach einem der Ansprüche 1 bis 9,
**dadurch gekennzeichnet, dass** Metallsulfat enthaltende Lösungen eingesetzt werden.

11. Verfahren nach einem der Ansprüche 1 bis 10,
**dadurch gekennzeichnet, dass** Alkalisulfat enthaltende Lösungen eingesetzt werden.

12. Verfahren nach einem der Ansprüche 1 bis 11,
**dadurch gekennzeichnet, dass** Ton oder tonhaltige Materialien zugesetzt werden.

13. Verfahren nach einer der Ansprüche 1 bis 12,
**dadurch gekennzeichnet, dass** Anhydrid-Granulate aus Anhydrit-Gestein durch sprengtechnische Zerkleinerung hergestellt werden.

14. Verfahren nach einem der Ansprüche 1 bis 13,
**dadurch gekennzeichnet, dass** a) ein äußerer Ring von Sprenglöchern angelegt wird, in denen eine erste Sprengung eingeleitet wird und b) innerhalb des äußeren Rings Profilbohrlöcher angelegt werden, in denen die nachfolgenden Sprengungen erfolgen.

15. Verfahren nach einem der Ansprüche 1 bis 14,
**dadurch gekennzeichnet, dass** innerhalb des Außenkranzes konzentrierte Erweiterungsbohrlöcher angelegt werden, in denen im Anschluss an Schritt b weitere Sprengungen erfolgen.

16. Gips hergestellt in einem Verfahren nach einem der Ansprüche 1 bis 15.
